# EUROPÄISCHE PATENTSCHRIFT

(11) **EP 2 206 578 B1**
(45) Veröffentlichungstag und Bekanntmachung des Hinweises auf die Patenterteilung: **25.05.2011**
(21) Anmeldenummer: 09178201.1
(22) Anmeldetag: 07.12.2009
(51) Int. Cl.: B23Q 7/00, B23Q 7/03, B65G 23/38

(54) **Transportband für eine Vorschubeinrichtung**
Transport belt for a feed device
Bande de transport pour un dispositif de déplacement en avant

(30) Priorität: 13.01.2009 DE 102009004433
(43) Veröffentlichungstag der Anmeldung: 14.07.2010
(73) Patentinhaber: Otto Bihler Handels-Beteiligungs-GmbH, 87642 Halblech (DE)
(72) Erfinder: Bihler, Mathias, 87642 Halblech (DE); Walter, Marc, 87642 Halblech (DE)
(74) Vertreter: Tiesmeyer, Johannes

(56) Entgegenhaltungen:
- EP-A1- 0 432 768
- EP-A2- 0 879 677
- EP-A2- 1 016 475
- WO-A1-89/06177

## Beschreibung

Die Erfindung betrifft ein Transportband, das einen um zwei achsparallel beabstandete Umlenkrollen einer Vorschubeinrichtung spannbaren, endlosen Bandkörper aufweist, um darauf - insbesondere schrittweise - transportierte Werkstücke auf ihrem Weg zwischen den Umlenkrollen zu bearbeiten, insbesondere zum Einsatz in entsprechenden Bearbeitungsmaschinen mit mehreren Bearbeitungsstationen, an denen die Werkstücke nacheinander schrittweise bearbeitet werden, z. B. umgeformt, montiert oder anderweitig verändert werden.

Mit solchen Transportbändern lassen sich zum Beispiel Kleinteile mit hohen Schrittfrequenzen von 200 bis 400 Schritten pro Minute bei hoher Passgenauigkeit im Mikrometerbereich bearbeiten, während sie auf dem Transportband verbleiben, insbesondere dort festgehalten werden.

Solche Transportbänder sind z.B. aus der EP 0 432 768 B1 und der EP 1 016 475 B1 bekannt. Dort ist das Band aus einem durchgehenden Stahlblechstreifen gebildet, das mittels eines Löcher an den Bandenden durchsetzenden Schlosselements zum Ring geschlossen ist. Bei den obigen Betriebsbedingungen mit der schnellen Schrittfrequenz wird das Band hoch belastet und kann, insbesondere im Bereich des Schlosses, brechen. Bei Beschädigung eines Abschnitts des Bandes - zum Beispiel Knick oder Bruch - muss das gesamte Band ausgetauscht werden, mit entsprechend langen Stillstandszeiten der gesamten Bearbeitungsvorrichtung, vor allem dann, wenn an dem Band angebrachte Werkstückhalter alle einzeln auf das neue Band ummontiert werden müssen.

Problematisch ist auch die Herstellung eines solchen langgestreckten Bandes mit einer für die Bearbeitung des darauf gehaltenen Werkstücks ausreichenden Präzision: Wenn eine Blechtafel in Streifen geschnitten wird, besteht die Neigung, dass sich die aus den Randbereichen der Blechtafel geschnittenen Bänder in ihrer Blechebene zu einer sogenannten Säbelform verbiegen und somit zum Ausschuss werden.

Für unterschiedlich lange Transportstrecken - der Abstand zwischen den Umlenkrollen ist je nach Ausführung unterschiedlich - müssen unterschiedlich lange Ersatzbänder knickfrei bevorratet werden.

Aus der EP 0 879 677 A2 ist ein Transportband nach dem Oberbegriff von Anspruch 1 bekannt. Dort sind die Platten starr und durch biegeelastische Elemente miteinander gelenkig verbunden.

Aufgabe der Erfindung ist es daher, eine Transportvorrichtung der eingangs genannten Art bereitzustellen, mit der sich diese Nachteile vermeiden lassen.

Zur Lösung wird ein Transportband gemäß Anspruch 1 angegeben.

Wenn nur ein Abschnitt des Transportbands beschädigt ist, genügt es - gegebenenfalls im eingebauten Zustand des Bandkörpers - nur die jeweils beschädigten Platten auszutauschen, während der Rest des Bandkörpers weiterverwendet werden kann und in der Vorschubeinrichtung verbleiben kann.

Das Band bleibt über seine Gesamtlänge ausreichend biegeelastisch, da die benachbarten Platten an ihren Längsenden einander teilweise überlappen und in ihrem Überlappungsbereich miteinander verbunden sind, zum Beispiel mittels Löcher im Überlappungsbereich durchsetzender Bolzen. Ferner erübrigt diese Überlappung die Verwendung der eingangs genannten Schlösser, welche die freien Enden des Bandes oder der Platten miteinander verbinden und abgesehen von der oben diskutierten Bruchgefahr einen unsteten Lauf um die Umlenkrollen und Positionsabweichungen im Bereich der Bearbeitungsstationen verursachen können.

Die Platten können in einem Schritt aus (Metall-) Tafeln, z. B. mittels eines Lasers herausgetrennt oder auch ausgestanzt werden, so dass das obige Problem der Säbelform und der einhergehende Ausschuss nicht auftritt.

Die Platten - es genügt im Prinzip ein einziges standardisiertes Plattenformat - können zu beliebig langen Transportbändern zusammengesetzt werden, was die Herstellung in Bezug auf unterschiedlich lange Transportstrecken und auch die Lagerhaltung vereinfacht.

Wenn die benachbarten Platten lösbar miteinander verbunden sind, z. B. mittels Schraubbolzen, lassen sich einzelne Platten schnell und problemlos austauschen.

Bevorzugt sind benachbarte Platten im Überlappungsbereich gelenklos fest miteinander derart verbunden, dass das Band über seine Länge zumindest weitestgehend durchgehend biegeelastisch ist. Dies vermeidet Gelenkspiel und ermöglicht einen glatten Lauf der Platten um die Umlenkrollen bei präziser Positionierung der auf dem Band angeordneten Werkstücke in Bezug auf die Bearbeitungsstationen. Grundsätzlich können die Platten aus jedem geeigneten Material hergestellt werden wie z. B. Kunststoff.

Bevorzugt sind die Platten aber aus Metallblech, insbesondere Stahlblech hergestellt, da dieses Material neben ausreichender Haltbarkeit und Elastizität auch gute Gleiteigenschaften auf entsprechenden Führungsschienen gewährleistet.

Bevorzugt überlappen die benachbarten Platten einander auf der jeweils gleichen Seite, derart, dass die Platten über die Länge des Bandes zueinander schuppenförmig angeordnet sind. Durch diese schuppenartig übereinander liegenden Platten bildet sich an jeder Schuppenstufe eine kleine Schmiermitteltasche, so dass der Bandlauf auf einer das Band im Bereich der Bearbeitungsstationen von unten stützenden Führungsschiene im Sinne einer Reibungsminderung begünstigt wird, was der Präzision des Bandlaufs und der Lebensdauer zugute kommt.

Bevorzugt liegen - in Bezug auf die Bandlaufrichtung - die jeweiligen Platten im Überlappungsbereich oben auf der jeweils nächsten stromaufwärtigen Platte auf, so dass die Stufenkante reibungsarm stromabwärts weist.

Bevorzugt stehen von den Platten Antriebsmitnehmer zum Eingriff in entsprechende Vertiefungen am Umfang der angetriebenen Rolle ab. Hierdurch stellen die Antriebsmitnehmer eine formschlüssige Kopplung zwischen der Antriebsrolle und dem Band her, wodurch sich der schrittweise Antrieb des Bandes mit dem Takt der Bearbeitungsstationen präzise koordinieren lässt.

Bevorzugt sind die Antriebsmitnehmer an ihren zu den Längsrändern des Bandes weisenden Seiten mit sich parallel zur Bandlängsrichtung erstreckenden Führungsflächen versehen. Diese Führungsflächen können dann mit entsprechenden ortsfesten Führungsschienen derart zusammenwirken, dass das Band senkrecht zu seiner Ebene und quer zur Laufrichtung geführt ist, ohne dass hierzu das Band von oben her, wo die Werkstücke angeordnet werden, von Führungselementen übergriffen werden muss und daher die Werkstücke auch von den Seiten her frei zugänglich sind.

Hierbei steht bevorzugt das Band beidseitig über die Antriebsmitnehmer vor, so dass die seitlich überstehenden Längsränder direkt auf entsprechenden Führungsschienen gleitend aufliegen können und somit flächig abgestützt werden.

Bevorzugt beträgt - bei Betrachtung in der Bandebene quer zur Bandlängsrichtung - der Winkel zwischen der Bandebene und der sich daran anschließenden, die Antriebskraft übertragenden Teilfläche des Antriebsmitnehmers weniger als 90°. Hierdurch wird ein Rutschkupplungseffekt erzielt. Wenn etwa, infolge mangelnder Synchronisation von Bandvorschub und Arbeitstakt an den Bearbeitungsstationen, die Antriebsrolle versucht, das Band um einen Schritt weiterzubewegen, aber das Band an einer der Bearbeitungsstationen noch blockiert ist, kann der Antriebsmitnehmer aus der jeweiligen Vertiefung der Antriebsrolle herausrutschen, so dass das Band nicht überlastet wird oder reißt oder gar der Antrieb beschädigt wird.

Um einen glattgängigen Bandlauf über die Umlenkrollen zu gewährleisten, kann die am Band anliegende Fläche des Antriebsmitnehmers in Bandlängsrichtung ballig gewölbt sein.

Grundsätzlich könnten die Antriebsmitnehmer auch zwischen den Plattenenden befestigt sein. Bevorzugt ist es aber, dass die Antriebsmitnehmer an jeweiligen Verbindungselementen, die die benachbarten Platten miteinander verbinden, befestigt sind, so dass sich zusätzliche Halterungen für die Antriebsmitnehmer und entsprechende Lochungen in den Platten erübrigen.

Um die Werkstücke positionsgenau zur Bearbeitung an den Bearbeitungsstationen festzuhalten, können an zumindest einigen der Platten auf ihrer von den Rollen abgewandten Seite Werkstückträger angebracht sein, deren Form dem jeweiligen Werkstück angepasst ist.

Grundsätzlich könnten die Werkstückträger auch zwischen den Plattenenden befestigt sein. Bevorzugt ist es aber, dass die Werkstückträger an jeweiligen Verbindungselementen, die die benachbarten Platten miteinander verbinden, befestigt sind, so dass sich zusätzliche Halterungen für die Werkstückträger und entsprechende Lochungen in den Platten erübrigen.

Mit besonders wenig Bauelementen und Lochungen der Platten kommt man aus, wenn die Antriebsmitnehmer und die Werkstückträger paarweise durch gemeinsame, Löcher der Platten durchsetzende Bolzen aneinander und an den Platten befestigt sind.

Bevorzugt sind Positionierungselemente vorgesehen, welche mit den Platten sowie entsprechenden Positionierungsflächen der Antriebsmitnehmer und Werkstückträger in Eingriff stehen, um diese Teile relativ zueinander in Richtung der Bandebene zu positionieren. Hierdurch lässt sich eine lange Lebensdauer, eine hohe Positionierungsgenauigkeit der Bauelemente und im Übrigen auch eine einfachere Montage erzielen.

Die Erfindung wird nachfolgend anhand von Ausführungsbeispielen unter Hinweis auf die beigefügten Zeichnungen erläutert.
- Fig. 1: zeigt eine schematische, teilweise weggebrochene Perspektiv- ansicht auf eine erfindungsgemäße Vorschubeinrichtung;
- Fig. 2: zeigt einen Querschnitt durch den Bandkörper und die orts- festen Führungsschienen der Vorschubeinrichtung entlang Linie II-II von Fig. 1;
- Fig. 3: zeigt einen achsnormalen Teilquerschnitt durch die angetrie- bene Umlenkrolle und
- Fig. 4: zeigt einen vergrößerten Teilquerschnitt eines Antriebsmitneh- mers gemäß dem eingekreisten Teil III von Fig. 3.

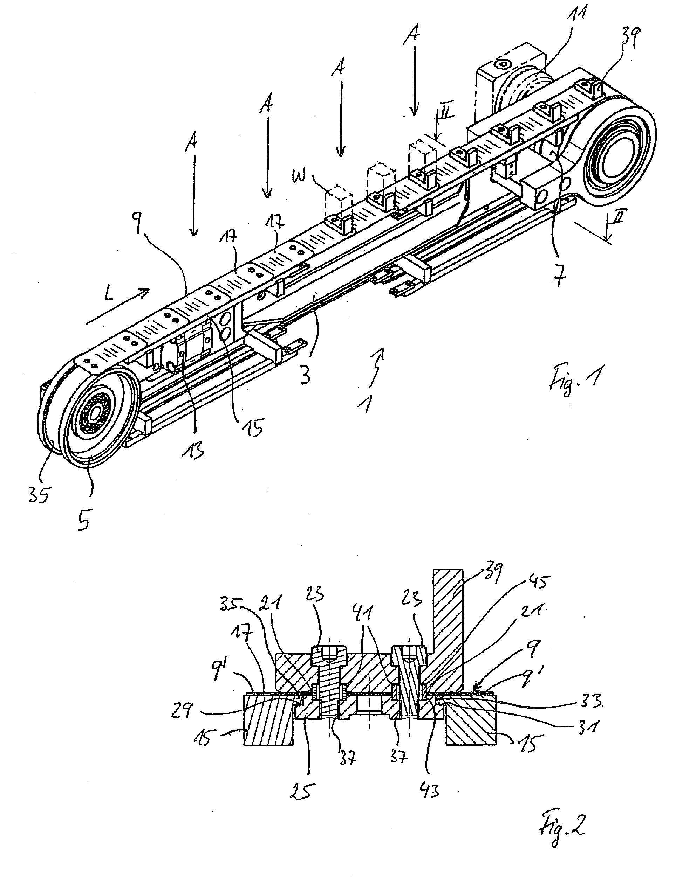

Wie in Fig. 1 allgemein dargestellt, umfasst eine Vorschubeinrichtung 1 grundlegend zwei achsparallel mit Abstand voneinander an einem Rahmen 3 gelagerte Umlenkrollen 5, 7, um die ein endlos geschlossener Bandkörper 9 herumgelegt ist. In Fig. 1 ist nur der obere Trum des Bandkörpers 9 dargestellt. Die eine Umlenkrolle 5 ist nicht angetrieben, und die andere Umlenkrolle 7 ist mittels eines Antriebsmotors 11 angetrieben. Um den Bandkörper 9 straff zu spannen, ist die nicht angetriebene Umlenkrolle 5 mittels eines Spannmechanismus 13 von der angetriebenen Umlenkrolle 7 weg vorspannbar. Über und entlang dem oberen Trum des Bandkörpers 9 befinden sich eine Reihe von Bearbeitungsstationen, die in Fig. 1 nur schematisch mit dem Pfeil A angedeutet sind und die auf dem oberen Trum des Bandkörpers 9 transportierte Werkstücke W, insbesondere Kleinteile, nacheinander bearbeiten, z. B. umformen, montieren oder anderweitig verändern. Hier erfolgt der Vorschub des Bandkörpers 9 schrittweise mit z. B. 200 bis 400 Schritten pro Minute, synchronisiert mit dem jeweiligen Takt der Bearbeitungsstationen A. Hierzu kann der Antriebsmotor 9 zum schrittweisen Betrieb angesteuert werden oder mit einem Schrittgetriebe versehen sein.

Wie in Fig. 2 im vergrößerten Querschnitt durch den Bandkörper 9 gezeigt, liegt der Bandkörper 9 entlang seinen beiden Längsrändern 9', 9' oben auf den jeweiligen durchgehenden rahmenfesten Schienen 15 gleitend auf und wird daran, wie weiter unten erläutert, auch seitlich geführt.

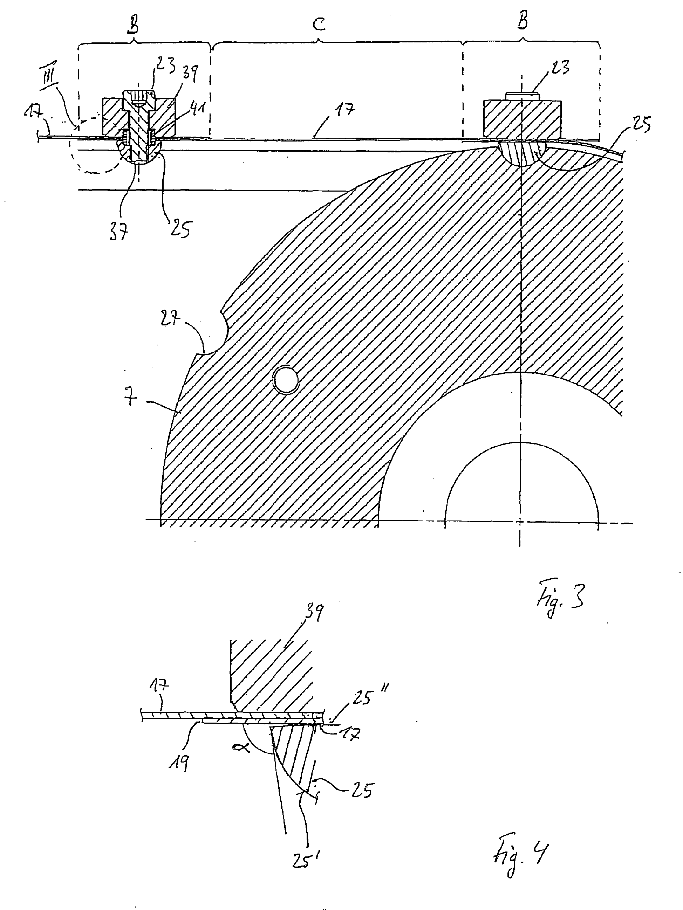

Der Bandkörper 9 ist aus einer Vielzahl hintereinander verbundener, partiell überlappender, hier profillos flacher, bevorzugt in eine ebene Konfiguration rückfedernder, biegeelastischer Platten 17 zusammengesetzt. In dem hier gezeigten Ausführungsbeispiel sind diese Platten 17 aus rostfreiem Federstahlblech oder ähnlich biegeelastischem Material hergestellt und rechteckig mit abgerundeten Ecken, mit einer Dicke von z. B. 0,2 bis 0,5 mm, hier 0,3 mm. Die Rechtecklängsränder der Platten 17 erstrecken sich in Längsrichtung (Laufrichtung L) des Bandkörpers 9. Der Überlappungsbereich B (Fig. 3) ist in Längsrichtung des Bandkörpers 9 kürzer als in dessen Breitenrichtung. Das Längen-/Breitenverhältnis der Platten 17 kann z. B. im Bereich von 1:1 bis 4:1 liegen, bevorzugt etwa 2:1. Zwischen den benachbarten Überlappungsbereichen B befindet sich somit ein nicht überlappter, einlagiger Bereich C. Die benachbarten Platten 17 überlappen einander jeweils an der gleichen Seite, so dass der gesamte Bandkörper 9 insgesamt eine schuppenartige Konfiguration bekommt und somit an den Schuppenstufen kleine Schmiermitteltaschen 19 entstehen, siehe Fig. 4, so dass die Schmierung zwischen den Führungsschienen 15 und an der Seite des Bandkörpers über die Gesamtlänge der Führungsschienen 15 sichergestellt werden kann. In Bezug auf die Bandlaufrichtung L liegen die jeweiligen Platten 17 auf der jeweils nächsten stromaufwärtigen Platte 17 auf, so dass die Stufenkante stromabwärts weist.

Im Überlappungsbereich B sind die jeweiligen Platten 17 mit einer sich quer zur Bandlängsrichtung L erstreckenden Reihe von Löchern 21 versehen, z. B. zwei solchen Löchern 21 in jedem Überlappungsbereich B, die um mehr als der Auflagebreite des Bandkörpers 9 auf den Führungsschienen 15 vom Längsrand der Platten 17 einwärts versetzt sind. Durch diese Löcher 21 erstrecken sich jeweilige Befestigungsbolzen 23, z. B. Schraubbolzen, welche die überlappenden Platten 17 fest zusammenhalten, insbesondere lösbar zusammenhalten.

Auf der Unterseite des Bandkörpers 9, hier im Überlappungsbereich B, sind mittels der Befestigungsbolzen 23 mit Abstand in Bandlängsrichtung L hintereinander Antriebsmitnehmer 25 befestigt, zum Eingriff in entsprechende Vertiefungen 27 am Umfang der angetriebenen Umlenkrolle 7. Die miteinander in Eingriff tretenden Oberflächen 25' des Antriebsmitnehmers 25 und der Vertiefung 27 sind komplementär zylindrisch gerundet.

Die Antriebsmitnehmer 25 bilden hier sich quer zur Bandlängsrichtung L erstreckende stangenförmige Elemente. An ihren jeweiligen Längsenden weisen die Antriebsmitnehmer 25 zur Bandseite hin offene, stufenförmige Ausnehmungen 29 auf, welche sich in Bandlängsrichtung L erstreckende und zur Bandebene parallele erste Führungsflächen 31 und hierzu orthogonale zweite Führungsflächen 33 bilden, in die eine von den jeweiligen Führungsschienen 15 abstehende Führungsleiste 35 eingreift. Die ersten Führungsflächen 31 stützen den Bandkörper 9 gegen Bewegungen nach oben, d. h. zu den Bearbeitungsstationen A hin, die zweiten Führungsflächen 33 führen den Bandkörper 9 seitlich, und diese führen, gemeinsam mit der oben erläuterten Auflage der Platten 17 auf der Oberseite der Führungsschienen 15, den Bandkörper 9 vertikal und horizontal in jeweils beide Richtungen.

Die mit dem Bandkörper 9 in Eingriff stehende Oberfläche 25" des Antriebsmitnehmers 25 ist bei Betrachtung in der Bandebene quer zur Bandlängsrichtung ballig gewölbt, mit einem Radius, der etwa dem Radius der Umlenkrollen 5, 7 entspricht. Der bei Betrachtung in der Bandebene quer zur Bandlängsrichtung L gebildete Winkel α zwischen der Bandebene und der Tangente der Antriebskraft-Übertragungsfläche 25' des Antriebsmitnehmers 25 beträgt weniger als 90°, z. B. etwa 80°. Hierdurch kann der Antriebsmitnehmer 25 aus der entsprechenden Vertiefung 27 der angetriebenen Rolle 7 herausrutschen, wenn sich diese weiterdreht, obwohl der Bandkörper 9 blockiert, im Sinne einer Rutschkupplung, etwa dann, wenn infolge mangelnder Synchronisation zwischen dem Takt der Bearbeitungsstationen A und der Drehung der angetriebenen Rolle 7 der Bandkörper 9 an den Bearbeitungsstationen A zwischen den jeweiligen Bearbeitungsschritten nicht rechtzeitig freigegeben wird.

Die nicht angetriebene Rolle 5 enthält eine Umfangsnut 35 zur freien Aufnahme der jeweiligen Antriebsmitnehmer 25.

Obwohl die Antriebsmitnehmer 25 grundsätzlich an beliebigen Stellen des Bandkörpers 9 angebracht sein können, sind sie hier mit den die überlappenden Platten 17 aneinander haltenden Bolzen 23 befestigt. Die Antriebsmitnehmer 25 enthalten entsprechende Gewindelöcher 37 und bilden somit ein gemeinsames Mutterelement für die Bolzen 23 an jeder Überlappungsstelle. Die Antriebskräfte von der Rolle 7 werden somit über die jeweiligen Antriebsmitnehmer 25 in den zweilagigen und somit besonders stabilen Überlappungsbereich B eingeleitet.

Auf der Oberseite des Bandkörpers 9 sind über die Bandlänge verteilt jeweilige Werkstückträger 39 angebracht, an denen die jeweils zu bearbeitenden Werkstücke W so befestigt werden, dass sie an den Bearbeitungsstationen A positionsgenau bearbeitet werden können. Obwohl hier die Werkstückträger 39 schematisch im Querschnitt L-förmig dargestellt sind (siehe Fig. 2), dient dies nur als Beispiel, und sie können jede beliebige geeignete Form haben, in Anpassung an die jeweilige Gestalt der Werkstücke und deren Bearbeitung, und können auch Klemmmechanismen aufweisen, welche die jeweiligen Werkstücke W festhalten.

Obwohl die Werkstückträger 39 grundsätzlich an beliebigen Stellen über die Bandlänge L verteilt angeordnet sein können, sind sie hier mittels der die überlappenden Platten 17 zusammenhaltenden Bolzen 23 am Bandkörper 9 befestigt, derart, dass sie und ein jeweiliger Antriebsmitnehmer 25 den Überlappungsbereich B zwischen sich aufnehmen, wodurch die Anzahl der Lochungen im Bandkörper 9, die zur Befestigung der Platten 17 aneinander sowie der Befestigung der Antriebsmitnehmer 25 und der Werkstückträger 39 am Bandkörper 9 so klein wie möglich gehalten wird.

Die Bolzen 23 sind von Positionierungshülsen 41 umgeben, welche mit den Löchern 21 der Platten 17 sowie entsprechenden Positionierungsflächen 43, 45 der Antriebsmitnehmer 25 und der Werkstückträger 39 in Eingriff stehen, um diese Teile relativ zueinander in der Richtung der Bandebene zueinander zu positionieren und die Antriebsführungskräfte spielfrei zu übertragen.

## Patentansprüche

1. Transportband, das einen um zwei achsparallel beabstandete Umlenkrollen (5, 7) einer Vorschubeinrichtung (1) spannbaren, endlosen Bandkörper (9) aufweist, um darauf transportierte Werkstücke (W) auf ihrem Weg zwischen den Umlenkrollen (5, 7) zu bearbeiten,
wobei der Bandkörper (9) aus einer Vielzahl von hintereinander verbundenen Platten (17) zusammengesetzt ist,
**dadurch gekennzeichnet,**
**dass** die Platten (17) biegelelastisch sind und die benachbarten biegeelastischen Platten (17) an ihren Längsenden einander teilweise überlappend aufeinanderliegen und in ihrem Überlappungsbereich (B) miteinander verbunden sind.

2. Transportband nach Anspruch 1, **dadurch gekennzeichnet, dass** die benachbarten Platten (17) lösbar miteinander verbunden sind.

3. Transportband nach Anspruch 1 oder 2, **dadurch gekennzeichnet, dass** benachbarte Platten (17) im Überlappungsbereich (B) gelenklos fest miteinander derart verbunden sind, dass der Bandkörper (9) über seine Länge zumindest weitgehend durchgehend biegeelastisch ist.

4. Transportband nach einem der vorhergehenden Ansprüche, **dadurch gekennzeichnet, dass** die Platten (17) aus Metallblech, insbesondere Stahlblech hergestellt sind.

5. Transportband nach einem der vorhergehenden Ansprüche, **dadurch gekennzeichnet, dass** die benachbarten Platten (17) mittels Löcher (21) im Überlappungsbereich (B) durchsetzender Bolzen (23) miteinander verbunden sind.

6. Transportband nach Anspruch 5, **dadurch gekennzeichnet, dass** die benachbarten Platten (17) einander auf der jeweils gleichen Seite überlappen, derart, dass die Platten (17) über die Länge des Bandkörpers (9) zueinander schuppenförmig angeordnet sind.

7. Transportband nach einem der vorhergehenden Ansprüche, **dadurch gekennzeichnet, dass** von den Platten (17) Antriebsmitnehmer (25) zum Eingriff in entsprechende Vertiefungen (27) am Umfang einer angetriebenen (7) der Umlenkrollen abstehen.

8. Transportband nach Anspruch 7, **dadurch gekennzeichnet, dass** die Antriebsmitnehmer (25) an ihren zu den Längsrändern des Bandkörpers (9) weisenden Seiten mit sich parallel zur Bandlängsrichtung (L) erstreckenden Führungsflächen (31, 33) versehen sind, welche mit entsprechenden ortsfesten Führungsschienen (15) derart zusammenwirken, dass der Bandkörper (9) senkrecht zu seiner Ebene und quer zur Bandlängsrichtung (L) geführt ist.

9. Transportband nach Anspruch 7 oder 8, **dadurch gekennzeichnet, dass** - bei Betrachtung in der Bandebene quer zur Bandlängsrichtung (L) - der Winkel (α) zwischen der Bandebene und der sich daran anschließenden, die Antriebskraft übertragenden Teilfläche (25") des Antriebsmitnehmers (25) weniger als 90° beträgt.

10. Transportband nach einem der Ansprüche 7 bis 9, **dadurch gekennzeichnet, dass** die am Bandkörper (9) anliegende Fläche (25") des Antriebsmitnehmers (25) in Bandlängsrichtung (L) ballig gewölbt ist.

11. Transportband nach einem der Ansprüche 7 bis 10, **dadurch gekennzeichnet, dass** die Antriebsmitnehmer (25) an jeweiligen Verbindungselementen (23), die die benachbarten Platten (17) miteinander verbinden, befestigt sind.

12. Transportband nach einem der vorhergehenden Ansprüche, **dadurch gekennzeichnet, dass** an zumindest einigen der Platten (17) auf ihrer von den Umlenkrollen (5, 7) abgewandten Seite jeweilige Werkstückträger (39) angebracht sind.

13. Transportband nach Anspruch 12, **dadurch gekennzeichnet, dass** die Werkstückträger (39) an jeweiligen Verbindungselementen (23), die die benachbarten Platten (17) miteinander verbinden, befestigt sind.

14. Transportband nach Anspruch 7 in Verbindung mit Anspruch 12, **dadurch gekennzeichnet, dass** die Antriebsmitnehmer (25) und die Werkstückträger (39) paarweise durch gemeinsame, Löcher (21) der Platten (17) durchsetzende Bolzen (23) aneinander und an den Platten (17) befestigt sind.

15. Transportband nach Anspruch 5 und Anspruch 14, **dadurch gekennzeichnet, dass** Positionierungselemente (41) vorgesehen sind, welche mit den Platten (17) sowie entsprechenden Positionierungsflächen (43, 45) der Antriebsmitnehmer (25) und Werkstückträger (39) in Eingriff stehen, um diese Teile relativ zueinander in Richtung der Bandebene zu positionieren.

## Claims

1. A conveyor belt which has an endless belt body (9), which can be tensioned around two axially parallel spaced apart return pulleys (5,7) of a feed device (1), to process workpieces (W) conveyed thereon on their path between the return pulleys (5,7),
wherein the belt body (9) is composed of a plurality of consecutively connected plates (17),
**characterised in**
**that** the plates (17) are flexible and at their longitudinal ends the adjacent flexible plates (17) lie partly overlapping one on top of the other and are connected to one another in their overlap zone (B).

2. A conveyor belt according to Claim 1, **characterised in that** the adjacent plates (17) are releasably connected to one another.

3. A conveyor belt according to Claim 1 or 2, **characterised in that** in the overlap zone (B) the adjacent plates (17) are securely and jointlessly connected to one another in such a way that the belt body (9) is at least substantially continuously flexible over its length.

4. A conveyor belt according to any one of the preceding Claims, **characterised in that** the plates (17) are made of sheet metal, in particular steel sheet.

5. A conveyor belt according to any one of the preceding Claims, **characterised in that** the adjacent plates (7) are connected to one another by means of bolts (23) passing through holes (21) in the overlap zone (B).

6. A conveyor belt according to Claim 5, **characterised in that** the adjacent plates (7) overlap one another on the respective same side so that the plates (7) are arranged scale-like with respect to one another over the length of the belt body (9).

7. A conveyor belt according to any one of the preceding Claims, **characterised in that** entrainment means (25) project from the plates (17) for engagement in corresponding recesses (27) on the periphery of a driven one (7) of the return pulleys.

8. A conveyor belt according to Claim 7, **characterised in that**, on their sides facing towards the longitudinal edges of the belt body (9), the entrainment means (25) are provided with guide surfaces (31,33) which extend parallel to the belt longitudinal direction (L) and which co-operate with corresponding stationary guide rails (15) so that the belt body (9) is guided perpendicularly to its plane and transversely to the belt longitudinal direction (L).

9. A conveyor belt according to Claim 7 or 8, **characterised in that**, when viewed in the belt plane transversely to the belt longitudinal direction (L), the angle (α) between the belt plane and the adjoining partial surface (25") of the entrainment means (25) is less than 90°.

10. A conveyor belt according to any one of Claims 7 to 9, **characterised in that** the surface (25") of the entrainment means (25) bearing against the belt body (9) is convexly curved in the belt longitudinal direction (L).

11. A conveyor belt according to any one of Claims 7 to 10, **characterised in that** the entrainment means (25) are fastened to respective connecting elements (23) which join together the adjacent plates (17).

12. A conveyor belt according to any one of the preceding Claims, **characterised in that** respective workpiece carriers (39) are mounted on at least some of the plates (17) on their side facing away from the return pulleys (5, 7).

13. A conveyor belt according to Claim 12, **characterised in that** the workpiece carriers (39) are fastened to respective connecting elements (23) which join together the adjacent plates (17).

14. A conveyor belt according to Claim 7 in combination with Claim 12, **characterised in that** the entrainment means (25) and the workpiece carriers (39) are fastened in pairs to one another and to the plates (17) by common bolts (23) passing through holes (21) in the plates (17).

15. A conveyor belt according to Claim 5 and Claim 14, **characterised in that** locating elements (41) are provided which are in engagement with the plates (17) and also corresponding locating surfaces (43,45) of the entrainment means (25) and workpiece carriers (39) so as to locate these parts relative to one another in the direction of the belt plane.

## Revendications

1. Bande de transport qui présente un corps de bande (9) sans fin, pouvant être tendu autour de deux poulies de renvoi (5, 7) espacées parallèlement à l'axe d'un dispositif d'avance (1), afin d'usiner des pièces (W) transportées dessus sur leur parcours entre les poulies de renvoi (5, 7), le corps de bande (9) étant composé d'une pluralité de plaques (17) reliées les unes derrière les autres,
**caractérisée en ce que** les plaques (17) sont élastiques en flexion et **en ce que** les plaques élastiques en flexion contiguës (17) reposent les unes sur les autres sur leurs extrémités longitudinales en partie par chevauchement et sont reliées les unes aux autres dans leur zone de chevauchement (B).

2. Bande de transport selon la revendication 1, **caractérisée en ce que** les plaques contiguës (17) sont reliées les unes aux autres de manière détachable.

3. Bande de transport selon la revendication 1 ou 2, **caractérisée en ce que** des plaques contiguës (17) sont reliées fixement les unes aux autres sans articulation dans la zone de chevauchement (B) de telle manière que le corps de bande (9) soit élastique en flexion au moins largement sur toute sa longueur.

4. Bande de transport selon l'une quelconque des revendications précédentes, **caractérisée en ce que** les plaques (17) sont fabriquées en tôle métallique, en particulier en tôle d'acier.

5. Bande de transport selon l'une quelconque des revendications précédentes, **caractérisée en ce que** les plaques contiguës (17) sont reliées les unes aux autres au moyen de boulons (23) traversant des trous (21) dans la zone de chevauchement (B).

6. Bande de transport selon la revendication 5, **caractérisée en ce que** les plaques contiguës (17) se chevauchent sur le même côté respectif de telle manière que les plaques (17) soient disposées de manière imbriquée les unes par rapport aux autres sur la longueur du corps de bande (9).

7. Bande de transport selon l'une quelconque des revendications précédentes, **caractérisée en ce que** des entraîneurs (25) dépassent des plaques (17) pour l'engagement dans des cavités correspondantes (27) sur la périphérie d'une poulie de renvoi entraînée (7).

8. Bande de transport selon la revendication 7, **caractérisée en ce que** les entraîneurs (25) sont pourvus, sur leurs côtés tournés vers les bords longitudinaux du corps de bande (9), de surfaces de guidage (31, 33) s'étendant parallèlement au sens longitudinal de bande (L), qui coopèrent avec des rails de guidage (15) fixes correspondants de telle manière que le corps de bande (9) soit guidé perpendiculairement à son plan et transversalement au sens longitudinal de bande (L).

9. Bande de transport selon la revendication 7 ou 8, **caractérisée en ce qu'**en cas d'observation dans le plan de bande transversalement au sens longitudinal de bande (L), l'angle (α) entre le plan de bande et la surface partielle (25") s'y raccordant, transmettant la force de propulsion, de l'entraîneur (25) s'élève à moins de 90°.

10. Bande de transport selon l'une quelconque des revendications 7 à 9, **caractérisée en ce que** la surface (25") reposant sur le corps de bande (9) de l'entraîneur (25) est courbée de manière convexe dans le sens longitudinal de bande (L).

11. Bande de transport selon l'une quelconque des revendications 7 à 10, **caractérisée en ce que** les entraîneurs (25) sont fixés sur des éléments de liaison respectifs (23) qui relient les plaques contiguës (17) entre elles.

12. Bande de transport selon l'une quelconque des revendications précédentes, **caractérisée en ce que** des porte-pièces (39) respectifs sont montés sur au moins quelques-unes des plaques (17) sur leur côté éloigné des poulies de renvoi (5, 7).

13. Bande de transport selon la revendication 12, **caractérisée en ce que** les porte-pièces (39) sont fixés sur des éléments de liaison respectifs (23) qui relient les plaques contiguës (17) entre elles.

14. Bande de transport selon la revendication 7 en liaison avec la revendication 12, **caractérisée en ce que** les entraîneurs (25) et les porte-pièces (39) sont fixés par paires par des boulons (23) communs, traversant des trous (21) des plaques (17) les uns sur les autres et sur les plaques (17).

15. Bande de transport selon les revendications 5 et 14, **caractérisée en ce que** des éléments de positionnement (41) sont prévus, lesquels sont en engagement avec les plaques (17) ainsi que des surfaces de positionnement correspondantes (43, 45) des entraîneurs (25) et des porte-pièces (39) afin de positionner ces parties les unes par rapport aux autres en direction du plan de bande.
